# EUROPÄISCHE PATENTSCHRIFT

(11) **EP 3 551 351 B1**
(45) Veröffentlichungstag und Bekanntmachung des Hinweises auf die Patenterteilung: **03.02.2021**
(21) Anmeldenummer: 16816241.0
(22) Anmeldetag: 12.12.2016
(51) Int. Cl.: B08B 3/02, B60P 3/00

(54) **MOBILES DEKONTAMINATIONSSYSTEM**
MOBILE DECONTAMINATION SYSTEM
SYSTÈME DE DÉCONTAMINATION MOBILE

(43) Veröffentlichungstag der Anmeldung: 16.10.2019
(73) Patentinhaber: Kärcher Futuretech GmbH, 71409 Schwaikheim (DE)
(72) Erfinder: REINHARDT, Ulli, 71522 Backnang (DE); SPAAN, Michael, 71106 Magstadt (DE); FRITZ, Daniel, 73663 Berglen (DE); HELLMUTH, Markus, 70186 Stuttgart (DE)
(74) Vertreter: Witte, Weller & Partner Patentanwälte mbB
(86) Internationale Anmeldenummer: PCT/EP2016/080652
(87) Internationale Veröffentlichungsnummer: WO 2018/108237

(56) Entgegenhaltungen:
- DE-A1-102004 047 225
- DE-C1- 4 414 971

## Beschreibung

Die vorliegende Erfindung betrifft ein mobiles Dekontaminationssystem zum Entgiften, Entseuchen und/oder Entstrahlen von Personen, Gegenständen und/oder Gebieten, mit einem Verbrennungsmotor mit einem Motorgehäuse und einer Motorwelle, mit einem Generator, der mit der Motorwelle gekoppelt ist und dazu ausgebildet ist, elektrischen Strom zu erzeugen, mit einer ersten Pumpe, die mit der Motorwelle gekoppelt ist und dazu ausgebildet ist, ein erstes Dekontaminationsmedium über eine erste Sprühlanze auszustoßen, mit einem Heizkessel, der dazu ausgebildet ist, das erste Dekontaminationsmedium aufzuheizen, mit einer zweiten Pumpe, die dazu ausgebildet ist, ein zweites Dekontaminationsmedium über eine zweite Sprühlanze auszustoßen, und mit einer Steuereinheit, die dazu ausgebildet ist, zumindest den Heizkessel und die erste Pumpe zu steuern.

Ein solches Dekontaminationssystem ist aus DE 10 2004 047 225 A1 bekannt.

Der Begriff "Dekontaminieren" ist ein Fachterminus für die gezielte Beseitigung und/oder Unschädlichmachung von radioaktiven, biologischen oder chemischen Substanzen, die ohne derartige Maßnahmen eine Gefahr für die Gesundheit und sogar das Leben von Personen darstellen. Derartige Substanzen können die Folgen von militärischen Anwendungen radioaktiver/nuklearer, biologischer oder chemischer Kampfstoffe oder die Folge von entsprechenden Terroranschlägen sein. Darüber hinaus können derartige Substanzen auch bei zivilen Unfällen zu einer Kontamination von Personen, Gegenständen und Gebieten führen, bspw. bei einem Unfall in einer Chemiefabrik oder einem Kernkraftwerk. Maßnahmen zur Dekontamination beinhalten das Entstrahlen, Entseuchen und Entgiften, wobei abhängig von der Art der Dekontamination unterschiedliche Dekontaminationsmedien und Vorgehensweisen zum Einsatz kommen können. Abhängig von der Art der Dekontamination können wässrige oder nicht-wässrige Dekontaminationsmedien, Heißdampf oder eine Kombination dieser Dekontaminationsmedien zur Anwendung kommen. Des Weiteren kann es bei einer Dekontamination notwendig sein, die Personen und/oder Gegenstände von "normalem" Schmutz und/oder dem Dekontaminationsmedium vor oder nach einer Anwendung zu befreien, d.h. zu reinigen. Dementsprechend ist ein Dekontaminationssystem im Sinne der Erfindung prinzipiell auch zur Reinigung von Personen und/oder Gegenständen geeignet und vorgesehen.

DE 10 2004 047 225 A1 offenbart ein mobiles Dekontaminations- und Reinigungsgerät mit einem Gitterrahmen, in dem ein Verbrennungsmotor, ein von dem Verbrennungsmotor angetriebener elektrischer Generator, eine Flüssigkeits-Hochdruckpumpe, ein Brenner und optional ein Luftkompressor angeordnet sind. Über den Generator kann eine externe Fasspumpe betrieben werden, die auf die Öffnung eines als Fass ausgebildeten Behälters für ein Dekontaminationsmedium aufgesetzt werden kann. Das bekannte Dekontaminationsgerät ermöglicht einen mobilen Betrieb und eine Vielzahl von unterschiedlichen Dekontaminationsaufgaben. Wahlweise kann mit der Flüssigkeits-Hochdruckpumpe und/oder mit der Fasspumpe ein jeweils geeignetes flüssiges Dekontaminationsmedium ausgestoßen werden. Der Kompressor dient zum Aufschäumen eines Dekontaminationsmediums aus dem externen Behälter. Zum Antrieb sind die Flüssigkeits-Hochdruckpumpe, der Generator und der optionale Kompressor über jeweils einen koppelbaren Riemenantrieb mit der Motorwelle verbunden. Die Erzeugung von Heißdampf als Dekontaminationsmedium ist bei diesem Dekontaminationsgerät nicht vorgesehen. Ebenso wenig ist ein multipler Betrieb vorgesehen, bei dem mehrere Dekontaminationsmedien parallel zueinander ausgestoßen werden können.

DE 44 14 971 C1 offenbart ein Hochdruckreinigungsgerät, das mit erwärmtem Reinigungsmittel oder mit Heißdampf betrieben werden kann. Das Hochdruckreinigungsgerät besitzt einen Wahlschalter für Flüssigbetrieb und für Dampfbetrieb. Im Dampfbetrieb wird Reinigungsmittel über eine Bypassleitung in den Wasserbehälter zurückgeführt. Außerdem wird der Dampfbetrieb nur zugelassen, wenn bestimmte Ventile durch eine Steuervorrichtung geschaltet sind.

Vor diesem Hintergrund ist es eine Aufgabe der vorliegenden Erfindung, ein mobiles Dekontaminationssystem der vorgenannten Art anzugeben, das bei kompakter Bauform einen noch variableren und vielfältigeren Einsatz ermöglicht.

Gemäß einem Aspekt der vorliegenden Erfindung wird diese Aufgabe durch ein Dekontaminationssystem der eingangs genannten Art gelöst, wobei der Heizkessel zumindest eine definierte Heizleistung besitzt und wobei die Steuereinheit dazu eingerichtet ist, die erste Pumpe und den Heizkessel wahlweise in einer von zumindest zwei verschiedenen Betriebsarten zu betreiben, wobei die erste Pumpe in einer ersten Betriebsart einen ersten Volumenstrom aus dem Heizkessel fördert, der so hoch ist, dass das erste Dekontaminationsmedium bei der zumindest einen definierten Heizleistung flüssig ist, und wobei die erste Pumpe in einer zweiten Betriebsart einen zweiten Volumenstrom aus dem Heizkessel fördert, der so niedrig ist, dass das erste Dekontaminationsmedium bei der zumindest einen definierten Heizleistung gasförmig ist.

Das neue Dekontaminationssystem besitzt einen erweiterten Funktionsumfang, da in der zweiten Betriebsart eine Dekontamination, insbesondere eine Entseuchung, mit Heißdampf möglich ist, dessen Erzeugung im Wesentlichen über den Volumenstrom gesteuert wird, mit dem die erste Pumpe das erste Dekontaminationsmedium fördert. Ein hoher Volumenstrom hat zur Folge, dass die Verweildauer des Dekontaminationsmediums in dem Heizkessel relativ kurz ist und dass sich das Dekontaminationsmedium in der Verweildauer nicht bis über den Siedepunkt aufheizt. Umgekehrt ist die Verweildauer des Dekontaminationsmediums in dem Heizkessel bei einem geringeren Volumenstrom höher und das Dekontaminationsmedium kann bei der definierten Heizleistung mehr Energie aufnehmen und somit in seine gasförmige Phase übergehen. Bevorzugt ist die Steuereinheit dazu eingerichtet, das erste Dekontaminationsmedium in dem Heizkessel mit Hilfe der ersten Pumpe unter einem definierten Druck zu halten, der zur Folge hat, dass das erste Dekontaminationsmedium in der zweiten Betriebsart erst beim Austritt aus der Sprühlanze, d.h. bei einer Entspannung, in seine gasförmige Phase übergeht.

In einigen bevorzugten Ausführungsbeispielen wird die Heizleistung mit Hilfe eines Brenners erzeugt, insbesondere mit Hilfe eines Diesel- und/oder Vielstoffbrenners. Die Einstellung der definierten Heizleistung kann in einigen Ausführungsbeispielen variabel erfolgen, weshalb die Steuereinheit vorzugsweise dazu eingerichtet ist, nicht nur den Volumenstrom zu variieren, sondern auch die Heizleistung. In anderen Ausführungsbeispielen kann der Heizkessel eine fest definierte Heizleistung aufweisen und die Steuereinheit wechselt zwischen der ersten und der zweiten Betriebsart über die Einstellung des Volumenstroms mit Hilfe der ersten Pumpe. Das erste Dekontaminationsmedium kann Wasser sein, bspw. Oberflächenwasser, Grundwasser und/oder in einem Tank mitgeführtes Wasser. Alternativ oder ergänzend kann das erste Dekontaminationsmedium ein chemisches Dekontaminationsmittel enthalten, das als wässrige Lösung ausgestoßen wird.

Das neue Dekontaminationssystem erreicht den erweiterten Funktionsumfang auf sehr einfache Weise und ermöglicht eine sehr kompakte und robuste Bauform, die für einen mobilen Einsatz in einem Katastrophengebiet gut geeignet ist. Die oben genannte Aufgabe ist daher vollständig gelöst.

In einer bevorzugten Ausgestaltung besitzt das Dekontaminationssystem ferner ein Anschlussfeld mit zumindest drei Anschlüssen für Sprühlanzen, wobei ein erster Anschluss mit der ersten Pumpe verbunden und dazu ausgebildet ist, die erste Sprühlanze für die erste Betriebsart lösbar anzuschließen bzw. zu verwenden, wobei ein zweiter Anschluss mit der zweiten Pumpe verbunden und dazu ausgebildet ist, die zweite Sprühlanze lösbar anzuschließen bzw. zu verwenden, und wobei ein weiterer Anschluss mit der ersten Pumpe verbunden und dazu ausgebildet ist, eine weitere Sprühlanze für die zweite Betriebsart anzuschließen bzw. zu verwenden.

In dieser Ausgestaltung besitzt das Dekontaminationssystem zumindest drei getrennte Anschlüsse für Sprühlanzen, die vorzugsweise nebeneinander und/oder übereinander zu einem Anschlussfeld angeordnet sind. Für die erste und die zweite Betriebsart der ersten Pumpe sind hiernach zumindest zwei separate Anschlüsse vorhanden. In einigen Ausführungsbeispielen ist die Steuereinheit dazu eingerichtet, den Volumenstrom aus dem Heizkessel wahlweise dem ersten Anschluss oder dem weiteren Anschluss zuzuführen, um zwischen der ersten und der zweiten Betriebsart auszuwählen. In einigen Ausführungsbeispielen erfolgt der Wechsel zwischen der ersten und der zweiten Betriebsart mit Hilfe von Ventilen, die wahlweise den ersten Anschluss und/oder den weiteren Anschluss öffnen oder schließen.

Des Weiteren besitzt das neue Dekontaminationssystem einen separaten Anschluss für die zweite Sprühlanze, die mit der zweiten Pumpe verbunden ist. Dies macht es möglich, die zweite Sprühlanze in gleicher Weise und wahlweise parallel zu der ersten und/oder weiteren Sprühlanze anzuschließen. Die Ausgestaltung ermöglicht eine sehr variable und zugleich einfache und komfortable Bedienung. Die Ausgestaltung besitzt darüber hinaus den Vorteil, dass jeweils optimale Sprühlanzen und/oder Schlauchleitungen für den flüssigen und gasförmigen Ausstoß des ersten Dekontaminationsmediums bereitgestellt werden können.

In einer weiteren Ausgestaltung besitzt das Dekontaminationssystem zumindest zwei erste Anschlüsse, die jeweils mit der ersten Pumpe verbunden sind und die dazu ausgebildet sind, das erste Dekontaminationsmedium über zwei erste Sprühlanzen wahlweise parallel auszustoßen.

Diese Ausgestaltung ermöglicht eine noch variablere Verwendung des neuen Dekontaminationssystems, da der Ausstoß des ersten Dekontaminationsmediums
- vorzugsweise in der ersten Betriebsart - in einem Parallelbetrieb ermöglicht wird. Vorzugsweise ist die Steuereinheit dazu ausgebildet, den Volumenstrom in jedem der zwei parallelen Leitungszweige auf einen definierten Wert einzustellen, so dass der Volumenstrom in dem einen Zweig unabhängig von dem Volumenstrom in dem anderen Zweig gehalten werden kann. Die Ausgestaltung ist besonders vorteilhaft, um innerhalb eines Dekontaminationsablaufs eine Vorreinigung und eine Nachreinigung mit Heißwasser oder einem anderen wasserbasierten Dekontaminationsmedium in einem "Fließbandbetrieb" zu ermöglichen. Vorzugsweise bilden alle vorgenannten Anschlüsse ein gemeinsames Anschlussfeld, was einen einfachen und robusten Betrieb unter Einsatzbedingungen erleichtert.

In einer weiteren Ausgestaltung ist die zweite Pumpe betriebsmäßig lösbar mit dem zweiten Anschluss verbunden.

Diese Ausgestaltung ermöglicht wahlweise einen Betrieb der zweiten Pumpe als integrierte Pumpe, d.h. über den zweiten Anschluss an dem gemeinsamen Anschlussfeld, oder separat davon, d.h. räumlich entfernt von dem Motor und der ersten Pumpe . Die Ausgestaltung ermöglicht damit einen noch variableren Betrieb unter wechselnden Einsatzbedingungen. Sie ist besonders vorteilhaft, wenn die zweite Pumpe wahlweise betrieben werden soll, um verschiedene Dekontaminationsaufgaben an einem oder an verschiedenen Gegenständen auszuführen.

In einer weiteren Ausgestaltung besitzt das Dekontaminationssystem eine Gehäusestruktur, insbesondere einen Gitterrahmen, die/der einen Innenbereich definiert, wobei der Verbrennungsmotor, der Heizkessel, der Generator, die erste Pumpe und die zweite Pumpe in dem Innenbereich angeordnet sind. Vorzugsweise ist auch die Steuereinheit in dem Innenbereich angeordnet.

Die Ausgestaltung integriert die genannten Komponenten räumlich kompakt und ermöglicht damit einen schnellen Transport zum Einsatzort. Zudem werden die Komponenten gegen Stöße, Schläge und andere Belastungen während eines Einsatzes oder beim Transport geschützt.

In einer weiteren Ausgestaltung ist die zweite Pumpe betriebsmäßig lösbar in dem Innenbereich angeordnet. Im Gegensatz dazu sind der Verbrennungsmotor, der Heizkessel, der Generator und die erste Pumpe in den bevorzugten Ausführungsbeispielen betriebsmäßig dauerhaft/fest in dem Innenbereich angeordnet.

"Betriebsmäßig lösbar" bedeutet, dass die zweite Pumpe im bestimmungsgemäßen Betrieb des Dekontaminationssystems wahlweise in den Innenbereich integriert und dort angeschlossen werden kann oder aus dem Innenbereich herausgenommen und separat betrieben werden kann. In bevorzugten Ausführungsbeispielen ist die zweite Pumpe mit reversibel lösbaren Befestigungselementen, wie etwa Schnappverschlüssen, Schraubverbindungen, Steckverbindungen, Rastverbindungen, Spannbändern oder einer Kombination davon innerhalb der Gehäusestruktur befestigt, wenn das Dekontaminationssystem zum Transport und/oder für einen Einsatz an einem räumlich eng begrenzten Ort eingerichtet ist. Im Gegensatz dazu ist die zweite Pumpe aus dem Innenbereich der Gehäusestruktur herausgelöst und räumlich von der Gehäusestruktur abgesetzt, wenn ein räumlich abgesetzter Betrieb an mehreren Einsatzorten gewünscht ist. Die Ausgestaltung ist besonders vorteilhaft, wenn die zweite Pumpe zudem betriebsmäßig lösbar mit dem zweiten Anschluss verbunden ist, da dies einen sehr einfachen Austausch der zweiten Pumpe in Abhängigkeit von dem verwendeten zweiten Dekontaminationsmedium ermöglicht. Insbesondere kann so eine jeweils geeignete Spezialpumpe für ausgewählte Dekontaminationsmedien auf einfache Weise in das System integriert werden. In einigen bevorzugten Ausführungsbeispielen besitzt das Dekontaminationssystem eine Vielzahl an zweiten Pumpen, die sich hinsichtlich ihrer Materialeigenschaften und/oder Förderleistung unterscheiden, wobei die Steuereinheit dazu eingerichtet ist, jeweils eine zweite Pumpe aus der Vielzahl an zweiten Pumpen in einem Einsatzbetrieb zu steuern. Das neue Dekontaminationssystem kann damit am Einsatzort individuelle an die Dekontaminationsaufgabe angepasst werden.

In einer weiteren Ausgestaltung besitzt das Dekontaminationssystem ein Bedienpanel mit Bedienelementen, wobei das Bedienpanel an der Gehäusestruktur abnehmbar gehalten und über eine Kabelverbindung betriebsmäßig dauerhaft mit der Steuereinheit verbunden ist.

In dieser Ausgestaltung besitzt das Dekontaminationssystem eine überlange Kabelverbindung zwischen dem Bedienpanel und der Steuereinheit, so dass das Bedienpanel als kabelgeführte Fernsteuerung räumlich entfernt von der Gehäusestruktur verwendet werden kann. Prinzipiell wäre auch eine drahtlose Fernsteuerung möglich, aber die bevorzugte Ausgestaltung ist robuster zu realisieren. Sie erhöht die Flexibilität des neuen Dekontaminationssystems noch weiter.

In einer weiteren Ausgestaltung besitzt das Dekontaminationssystem einen ersten stapelbaren Transportcontainer, in dem die Gehäusestruktur befestigt ist, und einen strukturgleichen zweiten stapelbaren Transportcontainer, in dem ein Wassertank angeordnet ist.

In dieser Ausgestaltung ist die Gehäusestruktur mit den funktionsbestimmenden Aggregaten (Verbrennungsmotor, Generator, erste und zweite Pumpe, Steuereinheit, Heizkessel) in ein modulares Containersystem integriert, wobei die Gehäusestruktur als solche beibehalten ist. Alternativ hierzu könnten die funktionsbestimmenden Aggregate in anderen Ausgestaltungen ohne die Gehäusestruktur in dem ersten Transportcontainer untergebracht sein. In der bevorzugten Ausgestaltung ist die Gehäusestruktur gewissermaßen "überflüssig". Die Ausgestaltung ermöglicht jedoch eine sehr kostengünstige Realisierung sowie einen nochmals variableren Betrieb. Zum einen kann das Dekontaminationssystem in dieser Ausgestaltung sehr einfach um einen transportablen Wassertank ergänzt werden. Zum anderen erleichtert diese Ausgestaltung die Integration des Dekontaminationssystems in vorhandene Transport- und Containerkonzepte.

In einer weiteren Ausgestaltung ist die Steuereinheit dazu eingerichtet, die zweite Pumpe wahlweise parallel zu der ersten Pumpe zu betreiben.

Diese Ausgestaltung beinhaltet, dass der Verbrennungsmotor in Bezug auf seine Leistungsfähigkeit für diesen Parallelbetrieb ausgelegt ist. Die Ausgestaltung ermöglicht beispielsweise eine Vor- und Nachreinigung mit dem ersten Dekontaminationsmedium sowie die eigentlichen Dekontamination mit dem zweiten Dekontaminationsmedium in einer Art "Fließbandbetrieb". Die Ausgestaltung ist daher sehr vorteilhaft für die Dekontamination einer Vielzahl von Personen und/oder Gegenständen.

In einer weiteren Ausgestaltung ist die zweite Pumpe eine elektrisch betriebene Chemiepumpe. Sie ist insbesondere zum Fördern von nicht-wässrigen Dekontaminationsmedien ausgebildet. In einigen Ausführungsbeispielen besitzt die zweite Pumpe eine Mischkammer, um mehrere Bestandteile des zweiten Dekontaminationsmediums bedarfsgerecht zu vermischen.

Diese Ausgestaltung ermöglicht einen autarken Betrieb des neuen Dekontaminationssystems unter Verwendung des integrierten Generators, wobei die elektrisch betriebene Chemiepumpe in Ergänzung zu der ersten Pumpe eine große Bandbreite an Dekontaminationsmedien möglich macht. Die Ausgestaltung ist zudem vorteilhaft, weil sie die einfache Integration von Spezialpumpen für besondere Dekontaminationsmedien ermöglicht. Als Spezialpumpe ist in diesem Zusammenhang eine Pumpe bezeichnete, die hinsichtlich ihres Aufbaus und/oder der verwendeten Materialien speziell an das zweite Dekontaminationsmedium angepasst ist.

In einer weiteren Ausgestaltung ist die Motorwelle an einer ersten Seite des Motorgehäuses mit der ersten Pumpe und an einer von der ersten Seite abgewandten zweiten Seite des Motorgehäuses mit dem Generator gekoppelt. Vorzugsweise sind die erste und die zweite Seite gegenüberliegende Seiten des Motorgehäuses, so dass das Motorgehäuse räumlich zwischen dem Generator und der ersten Pumpe angeordnet ist.

Diese Ausgestaltung ermöglicht eine sehr kompakte und robuste Realisierung des neuen Dekontaminationssystems. Sie macht es insbesondere möglich, sowohl den Generator als auch die erste Pumpe jeweils starr mit der einen Motorwelle anzutreiben. In einigen bevorzugten Ausführungsbeispielen ist ein Untersetzungsgetriebe zwischen der Motorwelle und der ersten Pumpe angeordnet, um eine höhere Motordrehzahl auf eine niedrigere Pumpendrehzahl herabzusetzen und somit einen effizienten Betrieb aller Aggregate zu erreichen.

In einer weiteren Ausgestaltung sind der Generator, die Motorwelle und die erste Pumpe entlang einer gemeinsamen Raumachse angeordnet. Vorzugsweise sind der Generator und die erste Pumpe riemen- und kettenlos mit der Motorwelle gekoppelt.

Diese Ausgestaltung trägt zu einer sehr kompakten und robusten Bauform bei und ermöglicht eine hohe Effizienz sowie einen niedrigen Schwerpunkt. Letzteres ist im Hinblick auf die Transportierbarkeit des neuen Dekontaminationssystems von Vorteil.

In einer weiteren Ausgestaltung besitzt das Dekontaminationssystem ein Getriebe, über das die erste Pumpe mit der Motorwelle gekoppelt ist, wobei der Generator, das Getriebe und die erste Pumpe entlang einer gemeinsamen Raumachse angeordnet sind.

Auch diese Ausgestaltung trägt zu einer kompakten und robusten Bauform mit einem niedrigen Schwerpunkt vorteilhaft bei.

In einer weiteren Ausgestaltung besitzt das Dekontaminationssystem eine Magnetkupplung, über die die erste Pumpe mit der Motorwelle gekoppelt ist, wobei der Generator, die Magnetkupplung und die erste Pumpe entlang einer gemeinsamen Raumachse angeordnet sind.

Diese Ausgestaltung trägt zu einem variablen und effizienten Betrieb des neuen Dekontaminationssystems bei, da sie es auf einfache Weise möglich macht, die erste Pumpe und die zweite Pumpe separat voneinander zu betreiben. Wahlweise kann die maximale Motorleistung der ersten und/oder der zweiten Pumpe zur Verfügung gestellt werden. Die Anordnung entlang der gemeinsamen Raumachse trägt zu einer kompakten und robusten Bauform mit niedrigem Schwerpunkt vorteilhaft bei.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel des neuen Dekontaminationssystems, wobei einige Teile aus Gründen der Übersichtlichkeit nicht dargestellt sind,
- Fig. 2: den Verbrennungsmotor, Generator und die erste Pumpe aus dem Ausführungsbeispiel gemäß Fig. 1,
- Fig. 3: ein vereinfachtes Fließschema zu dem Ausführungsbeispiel aus Fig. 1,
- Fig. 4: das Dekontaminationssystem aus Fig. 1 in einer optionalen Betriebssituation, und
- Fig. 5: das Dekontaminationssystem aus Fig. 1 in einer Variante mit stapelbaren Transportcontainern.

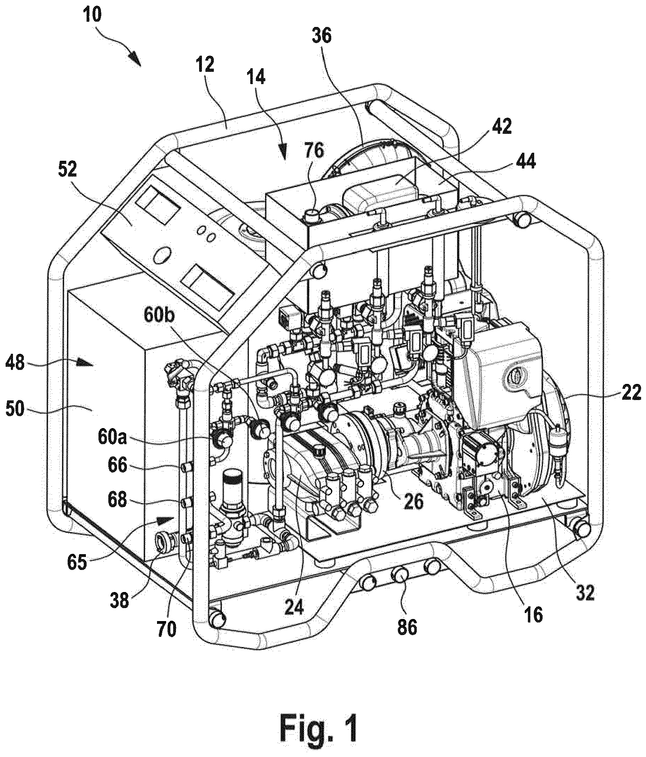

In den Figuren 1 bis 5 ist ein Ausführungsbeispiel des neuen Dekontaminationssystems in seiner Gesamtheit mit der Bezugsziffer 10 bezeichnet. Das Dekontaminationssystem 10 besitzt hier eine Gehäusestruktur in Form eines Rohrgitterrahmens 12, der einen Innenbereich 14 definiert. In diesem Innenbereich ist ein Motor 16 mit einem Motorgehäuse 18 und einer Motorwelle 20 angeordnet. In bevorzugten Ausführungsbeispielen ist der Motor 16 ein Verbrennungsmotor, der dazu eingerichtet ist, eine Vielzahl von unterschiedlichen Brennstoffen zu verbrennen, insbesondere Diesel oder Kerosin. In anderen Ausführungsbeispielen kann der Motor 16 ein Dieselmotor, ein Benzinmotor oder ein gasbetriebener Motor sein.

An einer ersten Seite 21 des Motorgehäuses ist ein Generator 22 angeordnet und mit der Motorwelle 20 gekoppelt. In bevorzugten Ausführungsbeispielen ist der Generator 22 ein Permanentmagnetgenerator, der einen dreiphasigen Drehstrom liefert, aus dem in einer nachfolgend beschriebenen Elektrobox mehrere verschiedene Ströme und Spannungen erzeugt werden. In anderen Ausführungsbeispielen kann der Generator ein Synchrongenerator sein. An einer zweiten Seite 23 des Motorgehäuses 18 ist eine erste Pumpe 24 angeordnet. In den bevorzugten Ausführungsbeispielen ist die Pumpe 24 eine Flüssigkeits-Hochdruckpumpe, die in der Lage ist, ein wässriges Dekontaminationsmedium mit einem Druck von bis zu 110 bar, vorzugsweise bis zu 300 bar über eine (hier nicht dargestellte) Sprühlanze auszustoßen. Generell ist die erste Pumpe in den bevorzugten Ausführungsbeispielen eine Hochdruckpumpe, die in der Lage ist, einen Volumenstrom von mehr als 1500 l/h, vorzugsweise bis zu 2000 l/h zu befördern. In dem hier dargestellten und bevorzugten Ausführungsbeispiel ist die erste Pumpe 24 über eine Magnetkupplung 26 und ein Getriebe 28 mit der Motorwelle 20 des Motors 16 gekoppelt. In bevorzugten Ausführungsbeispielen ist das Getriebe 28 ein Untersetzungsgetriebe mit einem Untersetzungsverhältnis von 2:1. Die Magnetkupplung 26 ist dazu ausgebildet, die erste Pumpe 24 wahlweise drehfest mit der Motorwelle 20 zu koppeln oder von der Motorwelle 20 zu trennen.

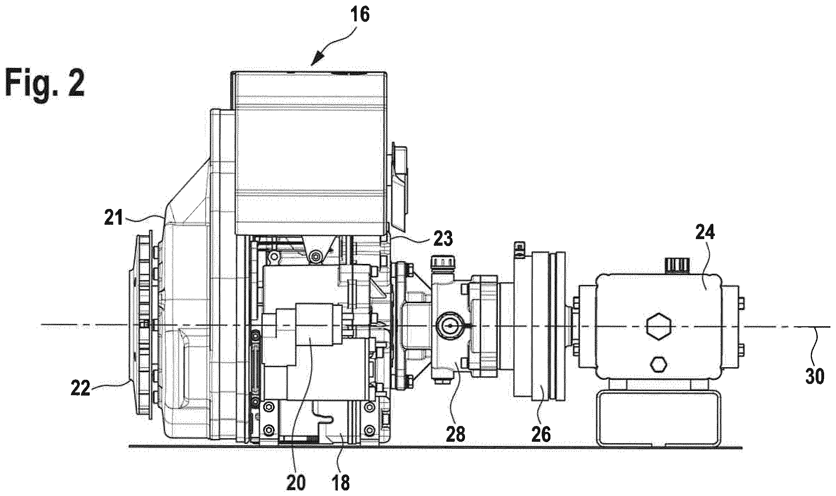

Wie in Fig. 2 dargestellt ist, sind der Generator 22, die erste Pumpe 24, die Magnetkupplung 26 und das Getriebe 28 in bevorzugten Ausführungsbeispielen entlang einer gemeinsamen Raumachse 30 angeordnet. Das Motorgehäuse 18 ist entlang der Raumachse 30 zwischen dem Generator 22 und der Pumpe 24 angeordnet. Wie man in Fig. 1 erkennen kann, ist der so gebildete Antriebsstrang auf einer Bodenplatte 32 befestigt, die ihrerseits in dem Innenbereich 14 des Rohrgitterrahmens 12 angeordnet ist.

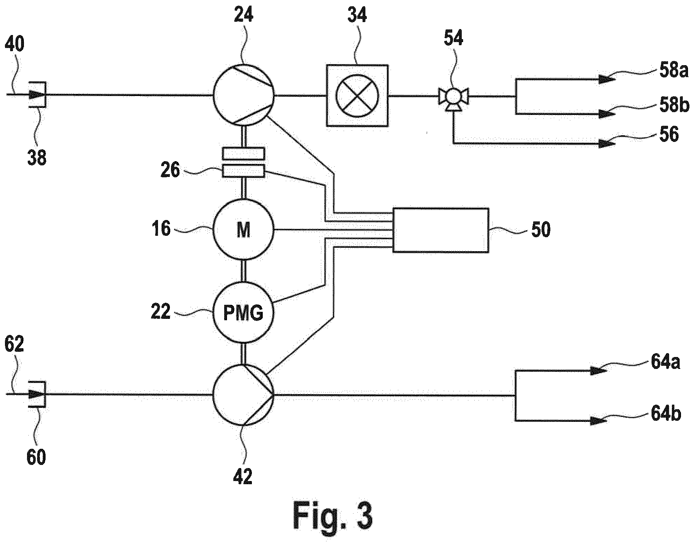

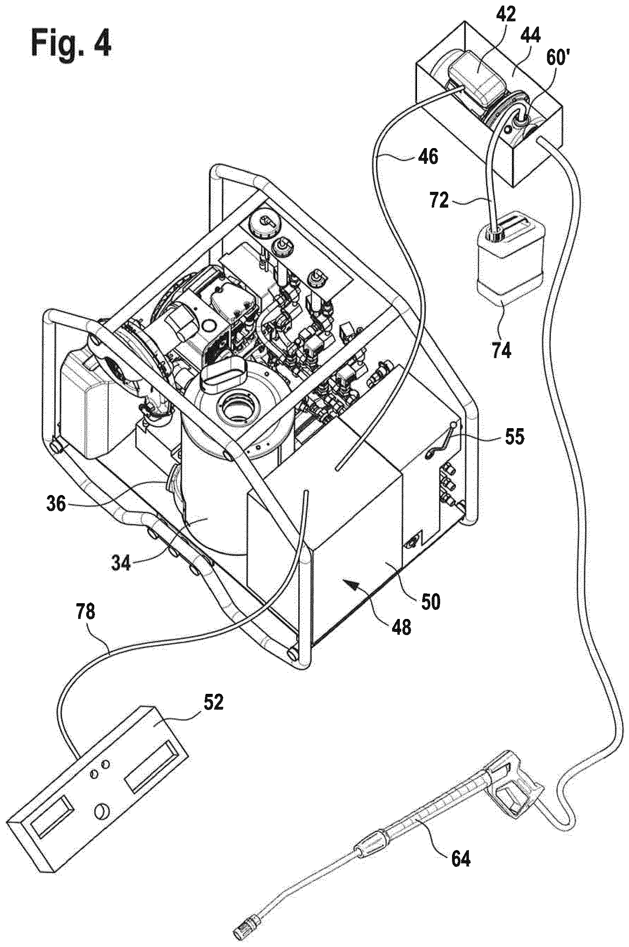

Mit der Bezugsziffer 34 (siehe Fig. 4) ist ein Heizkessel bezeichnet, der mit Hilfe eines Brenners 36 ein (erstes) Dekontaminationsmedium aufheizen kann. In Fig. 1 ist bei der Bezugsziffer 36 ein Gebläse des Brenners dargestellt, wobei der Brenner selbst aus Gründen der Übersichtlichkeit hier nicht näher gezeigt ist. In Fig. 4 ist der Brenneranschluss am unteren Teil des Heizkessels erkennbar. Das erste Dekontaminationsmedium ist in bevorzugten Ausführungsbeispielen Wasser oder eine wässrige Lösung, die mit Hilfe der ersten Pumpe 24 angesaugt und dem Heizkessel 34 zugeführt wird. In den Figuren 1 und 3 ist ein Anschluss 38 zum Ansaugen des ersten Dekontaminationsmediums 40 erkennbar. In einigen Einsatzszenarien wird an den Anschluss 38 eine Schlauchleitung angeschlossen, die bspw. in einen Fluss, Teich oder in einen Wassertank geführt wird (hier nicht dargestellt).

Mit der Bezugsziffer 42 ist eine zweite Pumpe bezeichnet. In den bevorzugten Ausführungsbeispielen ist die zweite Pumpe 42 eine elektrisch betriebene Chemiepumpe, die insbesondere zum Fördern von nicht-wässrigen Dekontaminationsmedien ausgebildet ist. Dies beinhaltet beispielsweise, dass sämtliche Teile, die mit dem zweiten Dekontaminationsmedium in Berührung kommen, in Edelstahl ausgeführt sein können. Wie in Fig. 1 dargestellt ist, ist die zweite Pumpe 42 in bevorzugten Ausführungsbeispielen in einer Wanne 44 angeordnet, die ihrerseits in dem Innenbereich 14 des Rohrgitterrahmens 12 Platz findet. Wie in Fig. 4 dargestellt ist, kann die zweite Pumpe 42 mit der Wanne 44 aus dem Innenbereich 14 des Rohrgitterrahmens 12 entnommen werden. Die Pumpe 42 kann dementsprechend wahlweise räumlich getrennt von dem Motor 16, Generator 22 und der ersten Pumpe 24 betrieben werden. Vorteilhaft ist die zweite Pumpe 42 über ein elektrisches Anschlusskabel 46 mit der Elektrobox 48 verbunden. Dementsprechend erhält die zweite Pumpe 42 in den bevorzugten Ausführungsbeispielen den Betriebsstrom über die Elektrobox 48 von dem Generator 22.

Die Elektrobox 48 enthält in den bevorzugten Ausführungsbeispielen einen oder mehrere Umrichter, die eine oder mehrere Betriebsspannungen zum Betrieb der zweiten Pumpe 42 und zum Betrieb weiterer elektrischer Aggregate (hier nicht dargestellt) bereitstellen. In den bevorzugten Ausführungsbeispielen beinhalten die bereitgestellten Betriebsspannungen eine 230 Volt Wechselspannung und/oder eine 400 Volt Drehspannung. Des Weiteren enthält die Elektrobox 48 Gleichrichter, die Betriebsgleichspannungen von beispielsweise 3,5 Volt, 5 Volt, 12Volt und 24 Volt bereitstellen, insbesondere für eine Steuereinheit 50 (siehe Fig. 3) und ein Bedienpanel 52. Die Steuereinheit 50 ist in den bevorzugten Ausführungsbeispielen eine elektrische programmierbare Steuerung mit einem Betriebsprogramm, das dauerhaft in einem nichtflüchtigen Speicher der Steuereinheit 50 abgelegt ist. Die Steuereinheit 50 ist mit Hilfe des Steuerprogramms insbesondere dazu eingerichtet, die erste Pumpe 24 und den Heizkessel 34 wahlweise in einer von zumindest zwei Betriebsarten zu betreiben. Des Weiteren ist die Steuereinheit 50 dazu eingerichtet, den Motor 16 und die zweite Pumpe 42 in Abhängigkeit von Bedienereingaben über das Bedienpanel 52 zu steuern.

Fig. 3 zeigt anhand eines vereinfachten Fließschemas einige wesentliche Funktionen des neuen Dekontaminationssystems, die wahlweise alternativ oder in Kombination miteinander verwendet werden können. Gleiche Bezugszeichen bezeichnen dieselben Elemente wie zuvor.

In einer ersten Betriebsart steuert die Steuereinheit 50 die erste Pumpe 24 so an, dass die erste Pumpe 24 über den Anschluss 38 ein erstes Dekontaminationsmedium 40, bspw. Wasser, ansaugt und dem Heizkessel 34 zuführt. Die Steuereinheit 50 steuert ferner den Brenner 36 an, um das Dekontaminationsmedium 40 in dem Heizkessel 34 aufzuheizen. Über einen Kugelhahn 54, der in einigen Ausführungsbeispielen ebenfalls von der Steuereinheit 50 angesteuert wird, kann das erste Dekontaminationsmedium 40 wahlweise in einem Ein-Lanzen-Betrieb oder einem Zwei-Lanzen-Betrieb ausgestoßen werden. In anderen Ausführungsbeispielen kann der Kugelhahn von Hand betätigt werden, etwa über einen Handgriff 55. In Fig. 3 ist eine Sprühlanze für einen Ein-Lanzen-Betrieb bei der Bezugsziffer 56 vereinfacht dargestellt. Die Bezugsziffern 58a, 58b bezeichnen zwei Sprühlanzen, die parallel zueinander an dem Kugelhahn 54 betrieben werden können.

In der ersten Betriebsart steuert die Steuereinheit 50 die Pumpe 24 so an, dass diese einen hohen Volumenstrom durch den Heizkessel 34 befördert. Infolgedessen verbleibt das Dekontaminationsmedium 40 eine relativ geringe Zeit in dem Heizkessel 34. Das Dekontaminationsmedium 40 wird aufgeheizt, erreicht in der ersten Betriebsart jedoch nicht seinen Siedepunkt. Infolgedessen wird das erste Dekontaminationsmedium in der ersten Betriebsart flüssig ausgestoßen, bspw. als Heißwasser mit einer Temperatur von etwa 60 °C. In dieser Betriebsart kann das Dekontaminationssystem 10 als Reinigungsgerät nach Art eines Hochdruckreinigers verwendet werden, wobei diese Reinigung im Rahmen eines Dekontaminationsablaufs als Vor- oder Nachreinigung vorteilhaft verwendet werden kann.

In einer zweiten Betriebsart steuert die Steuereinheit 50 die Pumpe 24 so an, dass die Pumpe 24 das Dekontaminationsmedium 40 mit einem geringeren Volumenstrom durch den Heizkessel 34 befördert. Aufgrund der höheren Verweildauer des Dekontaminationsmediums in dem Heizkessel kann sich dieses stärker aufheizen. In bevorzugten Ausführungsbeispielen regelt die Steuereinheit über die erste Pumpe und/oder mit Hilfe eines Druckablassventils den Innendruck in dem Heizkessel. In bevorzugten Ausführungsbeispielen kann sich das Dekontaminationsmedium 40 aufgrund des Innendrucks in dem Heizkessel über seinen Siedepunkt bei Umgebungsdruck aufheizen. Wasser als Dekontaminationsmedium kann beispielsweise in dem Heizkessel auf mehr als 100° C aufgeheizt werden. Beim Austritt des aufgeheizten Dekontaminationsmediums 40 aus der Sprühlanze 56 und/oder 58a, 58b entspannt sich das aufgeheizte Dekontaminationsmedium 40 und wird dadurch gasförmig. In anderen Ausführungsbeispielen kann das Dekontaminationsmedium 40 schon in dem Heizkessel in die gasförmige Phase übergehen. In jedem Fall kann das Dekontaminationsmedium 40 in der zweiten Betriebsart gasförmig mit Hilfe der Sprühlanze 56 und/oder 58a, 58b ausgestoßen werden. Diese Betriebsart eignet sich insbesondere zur Entseuchung von Gegenständen.

Die Steuereinheit 50 ist ferner dazu eingerichtet, die zweite Pumpe 42 wahlweise so anzusteuern, dass mit Hilfe der Pumpe 42 über einen zweiten Anschluss 60 ein zweites Dekontaminationsmedium 62 angesaugt und mit Hilfe von ein oder zwei Sprühlanzen 64a, 64b ausgestoßen werden kann. In einigen bevorzugten Fällen ist das zweite Dekontaminationsmedium 62 ein nicht-wässriges Dekontaminationsmedium, wie es bspw. unter der Bezeichnung GDS2000 von der Kärcher Futuretech GmbH, Deutschland angeboten wird.

Wie man in Fig. 1 erkennen kann, besitzt das Dekontaminationssystem 10 in dem hier dargestellten Ausführungsbeispiel mehrere zweite Anschlüsse 60a, 60b zum Zuführen von zweiten Dekontaminationsmedien. In einigen Ausführungsbeispielen können die Anschlüsse 60a, 60b vorteilhaft verwendet werden, um mehrere Bestandteile mit Hilfe der ersten oder zweiten Pumpe zu dem ersten oder zweiten Dekontaminationsmedium zu mischen.

Das Dekontaminationssystem 10 besitzt in den bevorzugten Ausführungsbeispielen ferner ein Anschlussfeld 65 mit Anschlüssen 66, 68, 70, an denen die Sprühlanzen zum Ausstoßen von Dekontaminationsmedien angeschlossen werden können. Beispielsweise ist der Anschluss 66 dazu ausgebildet, eine der Sprühlanzen 64a, 64b anzuschließen, um das zweite Dekontaminationsmedium 62 auszustoßen. Alternativ hierzu kann in einigen Ausführungsbeispielen ein Y-Verteiler (hier nicht gezeigt) an den Anschluss 66 angeschlossen werden, um zwei Sprühlanzen 64a, 64b parallel an dem Anschluss 66 zu betreiben.

Ein Anschluss 68 des Anschlussfeldes 65 ist dazu ausgebildet, eine der Anschlusslanzen 58a, 58b oder wahlweise einen Y-Verteiler anzuschließen, an dem dann die zwei Sprühlanzen 58a, 58b parallel zum Ausstoßen des ersten Dekontaminationsmediums in flüssiger Form (d.h. in der ersten Betriebsart) angeschlossen werden können. Ein weiterer Anschluss 70 ist dazu ausgebildet, eine Sprühlanze, wie etwa die Sprühlanze 56, anzuschließen, um das erste Dekontaminationsmedium in der zweiten Betriebsart und somit gasförmig auszustoßen.

Wie man in Fig. 4 erkennen kann, kann die zweite Pumpe 42 aus dem Innenbereich 14 des Rohrgitterrahmens 12 entnommen und räumlich von den anderen Aggregaten entfernt betrieben werden. In diesem Fall kann die zweite Pumpe 42 an ihrem Anschluss 60' vorteilhaft mit einer Ansauglanze 72 verbunden werden. Die Ansauglanze 72 kann direkt in die Öffnung eines Kanisters 74 eingesetzt werden, aus dem die zweite Pumpe 42 dann ein zweites Dekontaminationsmedium ansaugt und über die Sprühlanze 64 ausstößt.

Wenn die zweite Pumpe 42 hingegen in dem Innenbereich 14 des Rohrgitterrahmens 12 befestigt ist, wird der Anschluss 60' vorteilhaft mit einem Verschluss 76 verschlossen. Über eine Bajonettkupplung (hier nicht dargestellt) oder eine andere lösbare Schlauchkupplung, ist die zweite Pumpe 42 dann vorteilhaft mit den Anschlüssen 60a, 60b und mit dem Anschluss 68 verbunden, so dass das zweite Dekontaminationsmedium über die Anschlüsse 60a, 60b angesaugt und über den integrierten Anschluss 68 ausgestoßen werden kann.

Wie in Fig. 4 weiterhin dargestellt ist, kann das Bedienpanel 52 wahlweise von dem Rohrgitterrahmen 12 gelöst werden. Es ist dann über ein Anschlusskabel 78 mit Überlänge mit der Elektrobox 48 verbunden und ermöglicht eine Fernsteuerung des Dekontaminationssystems 10.

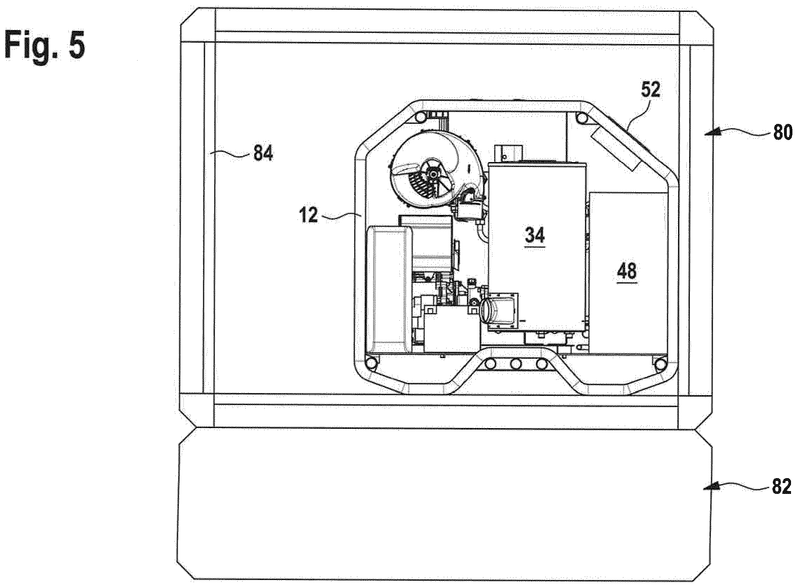

Wie in Fig. 5 dargestellt ist, besitzt das Dekontaminationssystem 10 in einigen bevorzugten Ausführungsbeispielen einen ersten stapelbaren Transportcontainer 80 und zumindest einen strukturgleichen zweiten stapelbaren Transportcontainer 82, wobei die Transportcontainer 80, 82 vorteilhaft aufeinandergestapelt werden können. Bevorzugt besitzen die Transportcontainer 80, 82 jeweils quaderförmige, strukturgleiche Rahmengestelle 84 mit jeweils acht Eckstücken und zwölf Kantenprofilen, wie dies in WO 2015/081998, die hier durch Bezugnahme aufgenommen ist, beschrieben ist. In einigen vorteilhaften Ausführungsbeispielen ist in dem Transportcontainer 82 ein Wassertank untergebracht (hier nicht näher dargestellt).

Das neue Dekontaminationssystem ermöglicht wahlweise einen Betrieb mit ein oder zwei ersten Sprühlanzen 58a, 58b zum Ausstoßen eines ersten, insbesondere flüssig-wässrigen Dekontaminationsmittels. Vorteilhaft können zwei erste Sprühlanzen 58a, 58b parallel zueinander betrieben werden, um eine Vorreinigung und eine Nachreinigung im Fließbandbetrieb auszuführen. Parallel dazu kann mit Hilfe der zweiten Pumpe ein zweites Dekontaminationsmedium ausgestoßen werden, das vorteilhaft für eine Hauptbehandlung verwendet werden kann. Wahlweise können zwei zweite Sprühlanzen 64a, 64b parallel mit dem Dekontaminationssystem 10 betrieben werden.

Des Weiteren kann ein erstes Dekontaminationsmedium so weit aufgeheizt werden, dass es gasförmig ausgestoßen wird. Die zweite Pumpe 42 kann wahlweise in der Gehäusestruktur des Dekontaminationssystems 10 integriert oder räumlich abgesetzt betrieben werden.

In einigen Ausführungsbeispielen können Räder (hier nicht dargestellt) an dem Rohramen 12 befestigt werden, insbesondere mit Steckachsen. Der Rohrahmen 12 besitzt dafür eine Vielzahl an Achsaufnahmen 86.

Insgesamt ermöglicht das neue Dekontaminationssystem einen variablen Betrieb für eine Vielzahl von Einsatzszenarien, so dass eine Vielzahl von unterschiedlichen Dekontaminationsaufgaben ausgeführt werden können.

## Patentansprüche

1. Mobiles Dekontaminationssystem zum Entgiften, Entseuchen und/oder Entstrahlen von Personen, Gegenständen und/oder Gebieten, mit einem Verbrennungsmotor (16) mit einem Motorgehäuse (18) und einer Motorwelle (20), mit einem Generator (22), der mit der Motorwelle (20) gekoppelt ist und dazu ausgebildet ist, elektrischen Strom zu erzeugen, mit einer ersten Pumpe (24), die mit der Motorwelle (20) gekoppelt ist und dazu ausgebildet ist, ein erstes Dekontaminationsmedium (40) über eine erste Sprühlanze (56, 58) auszustoßen, mit einem Heizkessel (34), der dazu ausgebildet ist, das erste Dekontaminationsmedium (40) aufzuheizen, mit einer zweiten Pumpe (42), die dazu ausgebildet ist, ein zweites Dekontaminationsmedium (62) über eine zweite Sprühlanze (64) auszustoßen, und mit einer Steuereinheit (50), die dazu ausgebildet ist, zumindest den Heizkessel (34) und die erste Pumpe (24) zu steuern, **dadurch gekennzeichnet, dass** der Heizkessel (34) zumindest eine definierte Heizleistung besitzt und dass die Steuereinheit (50) dazu eingerichtet ist, die erste Pumpe (24) und den Heizkessel (34) wahlweise in einer von zumindest zwei verschiedenen Betriebsarten zu betreiben, wobei die erste Pumpe (24) in einer ersten Betriebsart einen ersten Volumenstrom aus dem Heizkessel (34) fördert, der so hoch ist, dass das erste Dekontaminationsmedium (40) bei der zumindest einen definierten Heizleistung flüssig ist, und wobei die erste Pumpe (24) in einer zweiten Betriebsart einen zweiten Volumenstrom aus dem Heizkessel (34) fördert, der so niedrig ist, dass das erste Dekontaminationsmedium (40) bei der zumindest einen definierten Heizleistung gasförmig ist.

2. Mobiles Dekontaminationssystem nach Anspruch 1, **gekennzeichnet durch** ein Anschlussfeld (65) mit zumindest drei Anschlüssen (66, 68, 70) für Sprühlanzen (56, 58, 64), wobei ein erster Anschluss (68) mit der ersten Pumpe (24) verbunden ist und dazu ausgebildet ist, die erste Sprühlanze für die erste Betriebsart lösbar anzuschließen, wobei ein zweiter Anschluss (66) mit der zweiten Pumpe (42) verbunden ist und dazu ausgebildet ist, die zweite Sprühlanze (64) lösbar anzuschließen, und wobei ein weiterer Anschluss (70) mit der ersten Pumpe (24) verbunden ist und dazu ausgebildet ist, eine weitere Sprühlanze für die zweite Betriebsart anzuschließen.

3. Mobiles Dekontaminationssystem nach Anspruch 2, **gekennzeichnet durch** zwei erste Anschlüsse, die jeweils mit der ersten Pumpe (24) verbunden sind und die dazu ausgebildet sind, das erste Dekontaminationsmedium (40) über zwei erste Sprühlanzen (58a, 58b) wahlweise parallel auszustoßen.

4. Mobiles Dekontaminationssystem nach Anspruch 2 oder 3, **dadurch gekennzeichnet, dass** die zweite Pumpe (42) betriebsmäßig lösbar mit dem zweiten Anschluss (66) verbunden ist.

5. Mobiles Dekontaminationssystem nach einem der Ansprüche 1 bis 4, **gekennzeichnet durch** eine Gehäusestruktur (12), die einen Innenbereich (14) definiert, wobei der Verbrennungsmotor (16), der Heizkessel (34), der Generator (22), die erste Pumpe (24) und die zweite Pumpe (42) in dem Innenbereich (14) angeordnet sind.

6. Mobiles Dekontaminationssystem nach Anspruch 5, **dadurch gekennzeichnet, dass** die zweite Pumpe (42) betriebsmäßig lösbar in dem Innenbereich (14) angeordnet ist.

7. Mobiles Dekontaminationssystem nach Anspruch 5 oder 6, **gekennzeichnet durch** ein Bedienpanel (52) mit Bedienelementen, wobei das Bedienpanel (52) an der Gehäusestruktur (12) abnehmbar gehalten und über eine Kabelverbindung (78) betriebsmäßig dauerhaft mit der Steuereinheit (50) verbunden ist.

8. Mobiles Dekontaminationssystem nach einem der Ansprüche 5 bis 7, **gekennzeichnet durch** einen ersten stapelbaren Transportcontainer (80), in dem die Gehäusestruktur (12) befestigt ist, und einen strukturgleichen zweiten stapelbaren Transportcontainer (82), in dem ein Wassertank angeordnet ist.

9. Mobiles Dekontaminationssystem nach einem der Ansprüche 1 bis 8, **dadurch gekennzeichnet, dass** die Steuereinheit (50) dazu eingerichtet ist, die zweite Pumpe (42) wahlweise parallel zu der ersten Pumpe (24) zu betreiben.

10. Mobiles Dekontaminationssystem nach einem der Ansprüche 1 bis 9, **dadurch gekennzeichnet, dass** die zweite Pumpe (42) eine elektrisch betriebene Chemiepumpe ist, und insbesondere zum Fördern von nicht-wässrigen Dekontaminationsmedien ausgebildet ist.

11. Mobiles Dekontaminationssystem nach einem der Ansprüche 1 bis 10, **dadurch gekennzeichnet, dass** die Motorwelle (20) an einer ersten Seite des Motorgehäuses (18) mit der ersten Pumpe (24) und an einer von der ersten Seite abgewandten zweiten Seite des Motorgehäuses (18) mit dem Generator (22) gekoppelt ist.

12. Mobiles Dekontaminationssystem nach einem der Ansprüche 1 bis 11, **dadurch gekennzeichnet, dass** der Generator (22), die Motorwelle (20) und die erste Pumpe (24) entlang einer gemeinsamen Raumachse (30) angeordnet sind, wobei der Generator (22) und die erste Pumpe (24) vorzugsweise riemenlos mit der Motorwelle (20) gekoppelt sind.

13. Mobiles Dekontaminationssystem nach einem der Ansprüche 1 bis 12, **gekennzeichnet durch** ein Getriebe (28), über das die erste Pumpe (24) mit der Motorwelle (20) gekoppelt ist, wobei der Generator (22), das Getriebe (28) und die erste Pumpe (24) entlang einer gemeinsamen Raumachse (30) angeordnet sind.

14. Mobiles Dekontaminationssystem nach einem der Ansprüche 1 bis 13, **gekennzeichnet durch** eine Magnetkupplung (26), über die die erste Pumpe (24) mit der Motorwelle (20) gekoppelt ist, wobei der Generator (22), die Magnetkupplung (26) und die erste Pumpe (24) entlang einer gemeinsamen Raumachse (30) angeordnet sind.

## Claims

1. A mobile decontamination system for the detoxification, disinfection and/or radiological decontamination of people, objects and/or regions, comprising an internal combustion engine (16) having an engine housing (18) and an engine shaft (20), comprising a generator (22) coupled to the engine shaft (20) and designed for generating electric current, comprising a first pump (24) coupled to the engine shaft (20) and designed for discharging a first decontamination medium (40) via a first spray lance (56, 58), comprising a heating boiler (34) designed for heating the first decontamination medium (40), comprising a second pump (42) designed for discharging a second decontamination medium (62) via a second spray lance (64), and comprising a control unit (50) designed for controlling at least the heating boiler (34) and the first pump (24), **characterized in that** the heating boiler (34) has at least one defined heat output and the control unit (50) is designed for selectively operating the first pump (24) and the heating boiler (34) in one of at least two different operating modes, wherein the first pump (24) in a first operating mode delivers a first volumetric flow from the heating boiler (34) which is at such a high level that the first decontamination medium (40) is in liquid form at the least one defined heat output, and wherein the first pump (24) in a second operating mode delivers a second volumetric flow from the heating boiler (34) which is at such a low level that the first decontamination medium (40) is in gaseous form at the at least one defined heat output.

2. The mobile decontamination system of claim 1, **characterized by** a connection arrangement (65) with at least three connections (66, 68, 70) for spray lances (56, 58, 64), wherein a first connection (68) is connected to the first pump (24) and is designed for detachably connecting the first spray lance for the first operating mode, wherein a second connection (66) is connected to the second pump (42) and is designed for detachably connecting the second spray lance (64), and wherein an additional connection (70) is connected to the first pump (24) and is designed for connecting an additional spray lance for the second operating mode.

3. The mobile decontamination system of claim 2, **characterized by** two first connections which are each connected to the first pump (24) and which are designed for selectively discharging the first decontamination medium (40) via two first spray lances (58a, 58b) in parallel.

4. The mobile decontamination system of claim 2 or 3, **characterized in that** the second pump (42) is connected to the second connection (66) in an operationally detachable manner.

5. The mobile decontamination system of one of claims 1 to 4, **characterized by** a housing structure (12) which defines an inner region (14), wherein the internal combustion engine (16), the heating boiler (34), the generator (22), the first pump (24) and the second pump (42) are arranged in the inner region (14).

6. The mobile decontamination system of claim 5, **characterized in that** the second pump (42) is arranged in the inner region (14) in an operationally detachable manner.

7. The mobile decontamination system of claim 5 or 6, **characterized by** an operating panel (52) having operating elements, wherein the operating panel (52) is detachably mounted on the housing structure (12) and connected via a cable connection (78) to the control unit (50) in an operationally permanent manner.

8. The mobile decontamination system of one of claims 5 to 7, **characterized by** a first stackable transport container (80) in which is secured the housing structure (12), and by a second stackable transport container (82) of similar construction in which is arranged a water tank.

9. The mobile decontamination system of one of claims 1 to 8, **characterized in that** the control unit (50) is designed for selectively operating the second pump (42) in parallel with the first pump (24).

10. The mobile decontamination system of one of claims 1 to 9, **characterized in that** the second pump (42) is an electrically operated chemical pump, and , particularly, is designed for delivering non-aqueous decontamination agents.

11. The mobile decontamination system of one of claims 1 to 10, **characterized in that** the engine shaft (20) is coupled to the first pump (24) on a first side of the engine housing (18) and it is coupled to the generator (22) on a second side of the engine housing (18), which second side faces away from the first side

12. The mobile decontamination system of one of claims 1 to 11, **characterized in that** the generator (22), the engine shaft (20) and the first pump (24) are arranged along a common spatial axis (30), wherein, preferably, the generator (22) and the first pump (24) are coupled to the engine shaft (20) in a beltless manner.

13. The mobile decontamination system of one of claims 1 to 12, **characterized by** a gear (28) via which the first pump (24) is coupled to the engine shaft (20), wherein the generator (22), the gear (28) and the first pump (24) are arranged along a common spatial axis (30).

14. The mobile decontamination system of one of claims 1 to 13, **characterized by** a magnetic clutch (26) via which the first pump (24) is coupled to the engine shaft (20), wherein the generator (22), the magnetic clutch (26) and the first pump (24) are arranged along a common spatial axis (30).

## Revendications

1. Système de décontamination mobile pour décontaminer, désinfecter et/ou désintoxiquer des personnes, des objets et/ou des lieux, comprenant un moteur à combustion interne (16) avec un carter moteur (18) et un arbre de moteur (20), avec un générateur (22) qui est accouplé à l'arbre de moteur (20) et qui est réalisé de manière à générer du courant électrique, avec une première pompe (24) qui est accouplée à l'arbre de moteur (20) et qui est réalisée de manière à éjecter un premier milieu de décontamination (40) par le biais d'une première lance de pulvérisation (56, 58), avec une chaudière (34) qui est réalisée pour chauffer le premier milieu de décontamination (40), avec une deuxième pompe (42) qui est réalisée de manière à éjecter un deuxième milieu de décontamination (62) par le biais d'une deuxième lance de pulvérisation (64), et avec une unité de commande (50) qui est réalisée de manière à commander au moins la chaudière (34) et la première pompe (24), **caractérisé en ce que** la chaudière (34) possède au moins une puissance de chauffe définie et **en ce que** l'unité de commande (50) est prévue pour faire fonctionner la première pompe (24) et la chaudière (34) de manière sélective dans un mode de fonctionnement parmi au moins deux modes de fonctionnement différents, la première pompe (24), dans un premier mode de fonctionnement, refoulant un premier débit volumique hors de la chaudière (34), lequel est suffisamment important pour que le premier milieu de décontamination (40) soit liquide à l'au moins une puissance de chauffe définie, et la première pompe (24), dans un deuxième mode de fonctionnement, refoulant un deuxième débit volumique hors de la chaudière (34), lequel est suffisamment bas pour que le premier milieu de décontamination (40) soit gazeux à l'au moins une puissance de chauffe définie.

2. Système de décontamination mobile selon la revendication 1, **caractérisé par** un champ de raccordement (65) avec au moins trois raccords (66, 68, 70) pour des lances de pulvérisation (56, 58, 64), un premier raccord (68) étant connecté à la première pompe (24) et étant réalisé de manière à raccorder de manière desserrable la première lance de pulvérisation pour le premier mode de fonctionnement, un deuxième raccord (66) étant connecté à la deuxième pompe (42) et étant réalisé de manière à raccorder de manière desserrable la deuxième lance de pulvérisation (64), et un raccord supplémentaire (70) étant connecté à la première pompe (24) et étant réalisé de manière à raccorder une lance de pulvérisation supplémentaire pour le deuxième mode de fonctionnement.

3. Système de décontamination mobile selon la revendication 2, **caractérisé par** deux premiers raccords qui sont connectés à chaque fois à la première pompe (24) et qui sont réalisés de manière à éjecter de manière sélective le premier milieu de décontamination (40) parallèlement par le biais de deux premières lances de pulvérisation (58a, 58b).

4. Système de décontamination mobile selon la revendication 2 ou 3, **caractérisé en ce que** la deuxième pompe (42) est connectée fonctionnellement de manière desserrable au deuxième raccord (66).

5. Système de décontamination mobile selon l'une quelconque des revendications 1 à 4, **caractérisé par** une structure de boîtier (12) qui définit une région intérieure (14), le moteur à combustion interne (16), la chaudière (34), le générateur (22), la première pompe (24) et la deuxième pompe (42) étant disposés dans la région intérieure (14).

6. Système de décontamination mobile selon la revendication 5, **caractérisé en ce que** la deuxième pompe (42) est disposée fonctionnellement de manière desserrable dans la région intérieure (14).

7. Système de décontamination mobile selon la revendication 5 ou 6, **caractérisé par** un panneau de commande (52) avec des éléments de commande, le panneau de commande (52) étant retenu de manière amovible sur la structure de boîtier (12) et étant connecté fonctionnellement par le biais d'une liaison par câble (78) de manière permanente à l'unité de commande (50).

8. Système de décontamination mobile selon l'une quelconque des revendications 5 à 7, **caractérisé par** un premier récipient de transport empilable (80) dans lequel est fixée la structure de boîtier (12), et par un deuxième récipient de transport empilable de même structure (82) dans lequel est disposé un réservoir d'eau.

9. Système de décontamination mobile selon l'une quelconque des revendications 1 à 8, **caractérisé en ce que** l'unité de commande (50) est prévue pour faire fonctionner de manière sélective la deuxième pompe (42) parallèlement à la première pompe (24).

10. Système de décontamination mobile selon l'une quelconque des revendications 1 à 9, **caractérisé en ce que** la deuxième pompe (42) est une pompe chimique à commande électrique et est réalisée en particulier de manière à refouler des milieux de décontamination non aqueux.

11. Système de décontamination mobile selon l'une quelconque des revendications 1 à 10, **caractérisé en ce que** l'arbre de moteur (20) est accouplé au niveau d'un premier côté du carter moteur (18) à la première pompe (24) et au niveau d'un deuxième côté du carter moteur (18) opposé au premier côté au générateur (22).

12. Système de décontamination mobile selon l'une quelconque des revendications 1 à 11, **caractérisé en ce que** le générateur (22), l'arbre de moteur (20) et la première pompe (24) sont disposés le long d'un axe (30) commun de l'espace, le générateur (22) et la première pompe (24) étant de préférence accouplés sans courroie à l'arbre de moteur (20).

13. Système de décontamination mobile selon l'une quelconque des revendications 1 à 12, **caractérisé par** une transmission (28) par le biais de laquelle la première pompe (24) est accouplée à l'arbre de moteur (20), le générateur (22), la transmission (28) et la première pompe (24) étant disposés le long d'un axe (30) commun de l'espace.

14. Système de décontamination mobile selon l'une quelconque des revendications 1 à 13, **caractérisé par** un accouplement magnétique (26) par le biais duquel la première pompe (24) est accouplée à l'arbre de moteur (20), le générateur (22), l'accouplement magnétique (26) et la première pompe (24) étant disposés le long d'un axe (30) commun de l'espace.
